# FASCICULE DE BREVET EUROPEEN

(11) **EP 2 452 269 B1**
(45) Date de publication et mention de la délivrance du brevet: **05.06.2013**
(21) Numéro de dépôt: 10723206.8
(22) Date de dépôt: 06.04.2010
(51) Int. Cl.: G06F 13/42, B60W 30/16

(54) **PROCEDE DE CONTROLE D'UN SYSTEME DE REGULATION A CONTROLE DE DISTANCE, SYSTEME DE REGULATION ET CALCULATEUR DE TABLEAU DE BORD ASSOCIES**
VERFAHREN ZUR STEUERUNG EINES ADAPTIVEN GESCHWINDIGKEITSREGELUNGSSYSTEMS SOWIE ZUGEHÖRIGES STEUERSYSTEM UND BORDCOMPUTER
METHOD FOR CONTROLLING AN ADAPTIVE CRUISE CONTROL SYSTEM, AND CONTROL SYSTEM AND DASHBOARD COMPUTER ASSOCIATED THEREWITH

(30) Priorité: 08.07.2009 FR 0954704
(43) Date de publication de la demande: 16.05.2012
(73) Titulaire: Renault S.A.S., 92100 Boulogne-Billancourt (FR)
(72) Inventeur: MALLET, Mickael, F-78180 Montigny le Bretonneux (FR)
(86) Numéro de dépôt international: PCT/FR2010/050655
(87) Numéro de publication internationale: WO 2011/004082

(56) Documents cités:
- FR-A3- 2 923 315
- US-A1- 2003 130 783
- US-A1- 2004 119 333
- BOSCH: "CAN Specification version 2.0" INTERNET CITATION 30 septembre 1991 (1991-09-30), XP002156917 Extrait de l'Internet: URL:http://www.infineon.com/cmc_upload/mig rated_files/document_files/Appl ication_Notes/can2spec.pdf [extrait le 2001-01-10]

## Description

La présente invention concerne les systèmes de régulation de vitesse à contrôle de distance, ou systèmes ACC (initiales anglo-saxonnes mises pour « Adaptive Cruise Control »), équipant certains véhicules automobiles.

Un système ACC permet, d'une part, au conducteur du véhicule automobile de sélectionner une vitesse de croisière à laquelle le véhicule va rouler sans que le conducteur n'ait à maintenir le pied sur l'accélérateur et, d'autre part, au véhicule de garder de manière automatique une distance de sécurité avec un véhicule précédant le véhicule du conducteur, à partir de la détection de l'environnement présent devant le véhicule.

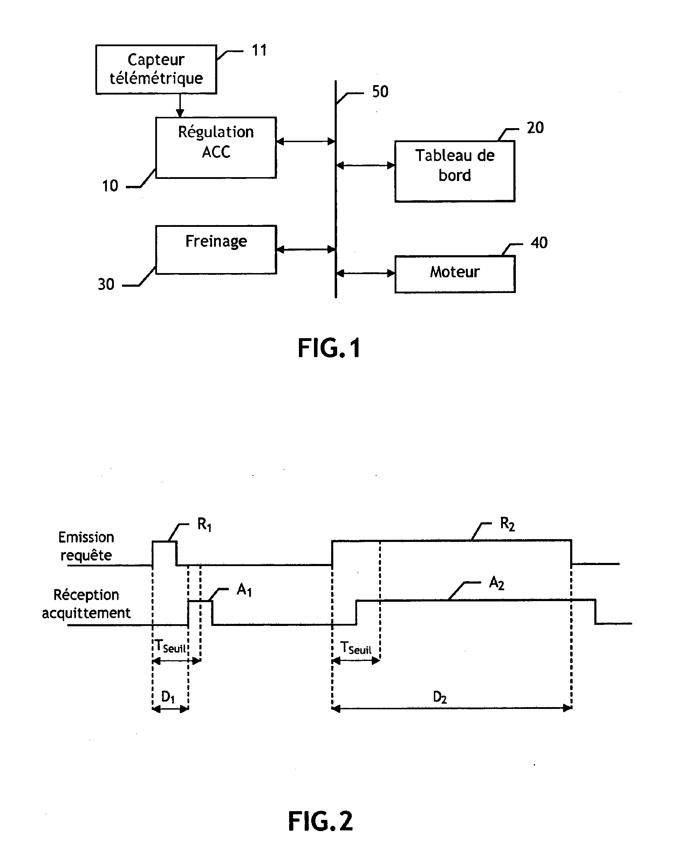

Pour ce faire, et comme représenté schématiquement sur la figure 1, un système ACC comporte classiquement un calculateur de régulation 10 relié aux autres calculateurs (contrôleur de tableau de bord 20, contrôleur du système de freinage 30 et contrôleur du moteur 40) équipant le véhicule automobile par un bus CAN 50 (initiales anglo-saxonnes mises pour « Controller Area Network »), ainsi qu'un capteur télémétrique 11, par exemple du type LIDAR (LIght Detection And Ranging) ou RADAR, apte à transmettre un signal à partir duquel le calculateur de régulation est capable de détecter la présence d'un véhicule, ou d'un obstacle, sur la scène routière située en avant du véhicule. Le rôle du système ACC étant d'adapter la vitesse du véhicule en fonction de la distance séparant ce véhicule de celui qui le précède, le système ACC commande automatiquement une décélération automatique du véhicule si la distance de sécurité est dépassée, puis une accélération automatique jusqu'à la vitesse de croisière si la voie se libère.

Pour autant, le système ACC n'a pas pour vocation de se substituer au conducteur, celui-ci devant toujours pouvoir reprendre le contrôle de la vitesse de son véhicule. Ainsi, la décélération automatique commandée par le système ACC est assez faible, et le conducteur doit être en mesure d'intervenir rapidement si la situation l'exige. Le système ACC est en conséquence adapté pour pouvoir transférer au contrôleur du tableau de bord 20, via le bus CAN 50, des requêtes d'alerte, le contrôleur du tableau de bord 20 commandant alors l'émission de signaux sonores et/ou visuels signifiant au conducteur qu'il est dans une situation demandant une vigilance particulière. Il existe plusieurs niveaux d'alertes en fonction de la situation. Notamment :
- le calculateur de régulation 10 émet une requête d'alerte brève lorsque le système ACC atteint sa limite basse de fonctionnement en vitesse, de manière à ce que le calculateur du tableau de bord 20 commande l'émission d'un bref signal d'alerte, de préférence sonore, pour avertir le conducteur ;
- le calculateur de régulation 10 émet une requête d'alerte continue lorsque la situation de conduite est telle que le système ACC est proche de ses limites de fonctionnement en termes de limitation de freinage. Le calculateur du tableau de bord 20 doit alors commander l'émission d'un signal d'alerte continu pour avertir le conducteur qu'il doit reprendre la main.

On comprend qu'un tel système, dont le but est d'assurer un confort de conduite, doit être assorti de mesures permettant de garantir la sécurité.

Certaines mesures sont liées aux conditions d'activation du système. Ainsi, le système ne doit être activé que sur une action volontaire du conducteur. Par ailleurs, le système ACC ne peut généralement pas être activé si le véhicule roule en-deçà d'une certaine vitesse, typiquement de l'ordre de 30 km/h. En outre, il peut être prévu d'interdire l'activation du système ACC lorsque la présence de pluie est détectée.

D'autres mesures sont relatives aux conditions de désactivation du système ACC. Ainsi, le système ACC se désactive dès que le conducteur appuie sur la pédale de frein. Par ailleurs, les consignes du système ACC sont suspendues tant que le conducteur appuie sur la pédale d'accélérateur. Dans certains cas, le système ACC peut également être désactivé suite à la détection de l'enclenchement du système d'essuie-glace.

Néanmoins, à ce jour, il n'existe aucun moyen permettant de s'assurer qu'un conducteur est bien effectivement alerté suite à une requête d'alerte émise par le calculateur de régulation. Ainsi, en cas de défaut dans la transmission des requêtes d'alerte sur le bus CAN, ou de défaut de traitement de ces requêtes par le calculateur de tableau de bord, aucune alerte sonore et/ou visuelle ne sera déclenchée. Il en résulte une insuffisance en termes de sûreté de fonctionnement.

La présente invention a pour but de pallier cette insuffisance.

Ainsi, la présente invention a pour objet un procédé de contrôle d'un système de régulation de vitesse à contrôle de distance pour véhicule automobile, dans lequel un calculateur dudit système de régulation transmet à un calculateur de tableau de bord des requêtes d'alerte par l'intermédiaire d'un bus CAN, caractérisé en ce qu'il comprend les étapes suivantes :
- Sur réception d'une requête d'alerte, génération par le calculateur du tableau de bord d'un message d'acquittement et transmission dudit message d'acquittement sur ledit bus CAN à destination du calculateur du système de régulation ;
- Surveillance par le calculateur du système de régulation de la réception dudit message d'acquittement.

La présente invention a également pour objet un système de régulation de vitesse à contrôle de distance pour véhicule automobile, dans lequel un calculateur dudit système de régulation est apte à transmettre à un calculateur de tableau de bord des requêtes d'alerte par l'intermédiaire d'un bus CAN, caractérisé en ce que ledit calculateur dudit système de régulation est apte à surveiller la réception d'un message d'acquittement suite à l'émission d'une requête d'alerte, et à générer une information relative au défaut d'acquittement en cas de non réception dudit message d'acquittement.

La présente invention a en outre pour objet un calculateur de tableau de bord pour véhicule automobile, apte à recevoir des requêtes d'alerte transmises par un calculateur de régulation d'un système de régulation à contrôle de distance par l'intermédiaire d'un bus CAN, caractérisé en ce que le calculateur du tableau de bord est apte à générer, sur réception d'une requête d'alerte, un message d'acquittement et à transmettre ledit message d'acquittement sur ledit bus CAN à destination du calculateur du système de régulation.

L'invention sera mieux comprise au vu de la description suivante faite en référence aux figures annexées, dans lesquelles :
- la figure 1, déjà décrite, illustre schématiquement la connexion de différents calculateurs équipant un véhicule automobile, dont le calculateur de régulation ACC et le calculateur du tableau de bord, au moyen d'un bus CAN ;
- La figure 2 illustre un exemple de requêtes d'alerte émises par le système de régulation et de messages d'acquittement reçus dans le cas d'un fonctionnement normal ;
- La figure 3 décrit sous forme de synoptique, les différentes étapes préférentiellement mises en oeuvre dans le procédé selon l'invention.

La figure 2 représente un fonctionnement normal de dialogue entre le calculateur 10 de régulation et le calculateur 20 du tableau de bord.

Le premier chronogramme sur la figure 2 illustre les deux types de requêtes d'alerte qui peuvent êtres émises au niveau du calculateur 10 de régulation et transmises au calculateur 20 du tableau de bord en vue de la génération d'un signal d'alerte sonore et /ou visuel pour le conducteur.

La première requête d'alerte R₁ est une requête d'alerte brève, dont la durée d'émission est de l'ordre de 300 millisecondes, alors que la deuxième requête R₂ est une requête d'alerte continue dont la durée peut être de l'ordre de la seconde.

Conformément à l'invention, le procédé comprend les étapes suivantes :
- Sur réception d'une requête d'alerte, le calculateur 20 du tableau de bord est supposé générer un message d'acquittement A₁ ou A₂ qui est transmis sur le bus CAN 50 à destination du calculateur 10 du système de régulation ;
- Le calculateur 10 du système de régulation effectue la surveillance de la réception dudit message d'acquittement.

La surveillance peut simplement consister à déclencher, au niveau du calculateur 10 de régulation, une temporisation dès transmission d'une requête d'alerte, et à générer une information relative au défaut d'acquittement si aucun message d'acquittement n'est reçu pendant une durée T_{Seuil} prédéterminée, par exemple de l'ordre de 500 millisecondes. Une telle surveillance permet ainsi de prendre en compte les retards induits par la transmission sur le bus CAN 50, et par le traitement dans les différents calculateurs.

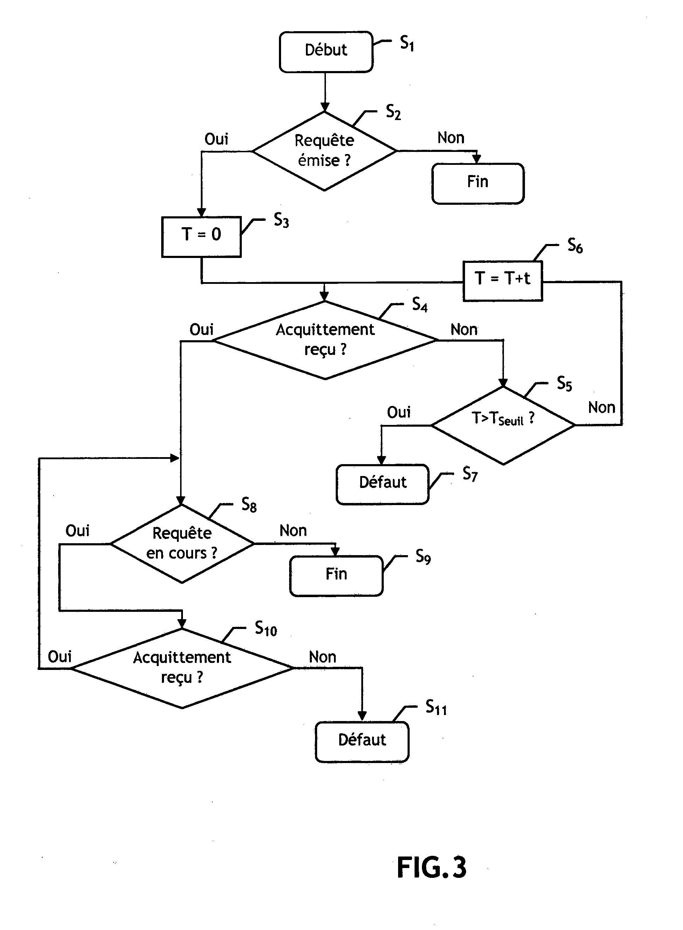

Dans la variante préférée du procédé selon l'invention telle que représentée à la figure 3, on prend compte en outre des deux types d'alertes brèves ou continues susceptibles d'être émises. La surveillance consiste alors à vérifier la réception d'un message d'acquittement, sachant que :
- pour les requêtes d'alerte brèves R₁, les messages d'acquittement A₁ correspondants ne sont reçus qu'après la fin de l'émission de la requête ;
- pour les requêtes d'alerte continues R₂, les messages d'acquittement correspondants A₂ doivent être reçus en continu au bout au plus de la durée T_{Seuil} et pendant toute la durée d'émission de la requête d'alerte.

La figure 3 montre les différentes étapes mises en oeuvre dans cette variante préférée :

La condition initiale S₁ pour la mise en route de la surveillance est que le Système ACC a préalablement été activé. Le calculateur 10 de régulation est donc susceptible, si les conditions l'exigent, de transmettre au calculateur 20 du tableau de bord, une requête d'alerte brève R₁ ou continue R₂.

La surveillance d'un acquittement ne devant être faite que dans le cas d'une transmission d'une requête d'alerte, le procédé selon l'invention consiste à vérifier tout d'abord (étape S₂) si le calculateur 10 de régulation émet une requête d'alerte, et ce, quel que soit le type de la requête émise (R₁ ou R₂). Le cas échéant, une temporisation est déclenchée (étape S₃). Les étapes S₄ à S₆ servent à vérifier si un message d'acquittement est reçu pendant la durée prédéterminée T_{Seuil}. A ce stade, on ne s'intéresse pas encore au type de message d'acquittement reçu (A₁ ou A₂). Ainsi, on vérifie la réception d'un message d'acquittement (étape S₄), et ce, tant que la temporisation n'a pas dépassé la durée T_{Seuil} (étapes S₅, S₆). Si, au bout de cette durée prédéterminée T_{Seuil}, aucun message d'acquittement n'a été reçu, une information relative au défaut d'acquittement est générée par le calculateur 10 de régulation (étape S₇).

Dans le cas contraire (acquittement reçu en étape S₄), on s'intéresse au type de requête d'alerte qui a été émise de manière à offrir une surveillance adaptée. Plus précisément, on vérifie à nouveau si la requête en alerte est toujours en cours d'émission (étape S₈). Si la requête en alerte n'est plus en cours, la surveillance peut prendre fin (étape S₉) puisqu'il s'agit nécessairement d'une requête d'alerte de type bref R₁, et que l'on sait déjà que le message d'acquittement A₁ relatif à cette requête a été reçu (étape antérieure S₄). Dans le cas contraire (requête en alerte toujours en cours), on est nécessairement dans le cas d'une requête d'alerte de type continu R₂, et l'on vérifie que le message d'acquittement correspondant est reçu en continu jusqu'à la fin de la requête d'alerte (étape S₁₀ suivie de l'étape S₈). Une information relative au défaut d'acquittement est générée par le calculateur 10 de régulation si le message d'acquittement A₂ prend fin alors que la requête en alerte R₂ est toujours en cours (étape S₁₁).

Il convient de noter à ce stade que la gestion du type d'alertes (R₁ ou R₂) pourrait être faite dès le début de la surveillance puisque cette information est connue du calculateur 10 de régulation.

Sur la figure 2, la durée D₁ correspond à la durée de la surveillance de l'acquittement pour une requête brève R₁, et la durée D₂ correspond à la durée de surveillance pour une requête continue R₂. On constate que la surveillance démarre dès que la requête en alerte R₁ ou R₂ est émise. La surveillance s'achève instantanément si au moment de la réception d'un message d'acquittement, la requête d'alerte correspondante n'est plus en cours. En revanche, la surveillance reste active si la requête d'alerte est toujours en cours, et ce, jusqu'à la fin de la requête d'alerte.

Grâce à cette surveillance, le calculateur 10 de régulation peut décider de certaines actions permettant de garantir la sécurité. Notamment, le système ACC peut être désactivé si une information relative à un défaut d'acquittement a été générée. En variante, le système ACC peut être désactivé si le nombre d'informations relatives à un défaut d'acquittement générées sur une période prédéfinie est supérieur à un nombre limite prédéterminé. Ainsi, on limite les risques de sécurité qui seraient liés à un défaut dans la transmission des requêtes d'alerte et/ou dans leur traitement par le tableau de bord.

## Revendications

1. Procédé de contrôle d'un système de régulation de vitesse à contrôle de distance pour véhicule automobile, dans lequel un calculateur (10) dudit système de régulation transmet à un calculateur (20) de tableau de bord des requêtes d'alerte (R₁, R₂) par l'intermédiaire d'un bus CAN (50), **caractérisé en ce qu'**il comprend les étapes suivantes :
- Sur réception d'une requête d'alerte (R₁, R₂), génération par le calculateur (20) du tableau de bord d'un message d'acquittement (A₁, A₂) et transmission dudit message d'acquittement (A₁, A₂) sur ledit bus CAN (50) à destination du calculateur (10) du système de régulation ;
- Surveillance par le calculateur (10) du système de régulation de la réception dudit message d'acquittement (A₁, A₂),
l'étape de surveillance comprenant, au niveau du calculateur (10) du système de régulation, les étapes de :
- Déclenchement (S₃) d'une temporisation (T) dès transmission d'une requête d'alerte (R₁, R₂) ;
- Génération (S₇) d'une information relative au défaut d'acquittement si aucun message d'acquittement (A₁, A₂) n'est reçu pendant une durée prédéterminée (T_{Seuil}),
- Vérification (S₈) qu'une requête d'alerte (R₂) est toujours en cours suite à la réception d'un message d'acquittement ;
- Surveillance (S₁₀) de la réception dudit message d'acquittement (A₂) tant que la requête d'alerte (R₂) est en cours ;
- Génération (S₁₀) d'une information relative au défaut d'acquittement si la réception du message d'acquittement (A₂) prend fin alors que la requête d'alerte (R₂) est en cours.

2. Procédé de contrôle selon la revendication 1, **caractérisé en ce que** le système de régulation est désactivé si une information relative au défaut d'acquittement a été générée.

3. Procédé de contrôle selon la revendication 1, **caractérisé en ce que** le système de régulation est désactivé si le nombre d'informations relatives au défaut d'acquittement générées sur une période prédéfinie est supérieur à un nombre limite prédéterminé.

4. Système de régulation de vitesse à contrôle de distance pour véhicule automobile, dans lequel un calculateur (10) dudit système de régulation est apte à transmettre à un calculateur (20) de tableau de bord des requêtes d'alerte (R₁, R₂) par l'intermédiaire d'un bus CAN (50), **caractérisé en ce que** ledit calculateur (10) dudit système de régulation est apte à surveiller la réception d'un message d'acquittement (R₁, R₂) suite à l'émission d'une requête d'alerte (A₁, A₂) conformément aux étapes du procédé selon la revendication 1, et à générer une information relative au défaut d'acquittement en cas de non réception dudit message d'acquittement (R₁, R₂).

5. Système de régulation selon la revendication 4, **caractérisé en ce que** ledit calculateur (10) dudit système de régulation est apte à désactiver le système de régulation lorsque le nombre d'informations relatives au défaut d'acquittement générées sur une période prédéfinie est supérieur à un nombre limite prédéterminé.

## Patentansprüche

1. Steuerverfahren eines Geschwindigkeitsregelungssystems mit Entfernungssteuerung für Kraftfahrzeug, bei dem ein Rechner (10) des Regelungssystems einem Rechner (20) des Armaturenbretts Warnungsabfragen (R₁, R₂) über einen CAN-Bus (50) sendet, **dadurch gekennzeichnet, dass** es die folgenden Schritte aufweist:
- beim Empfang einer Warnungsabfrage (R₁, R₂), Erzeugen durch den Rechner (20) des Armaturenbretts einer Quittungsrückmeldung (A₁, A₂) und Übertragen der Quittungsrückmeldung (A₁, A₂) auf dem CAN-Bus (50) zu dem Rechner (10) des Regelungssystems,
- Überwachen durch den Rechner (10) des Regelungssystems des Empfangs der Quittungsrückmeldung (A₁, A₂),
wobei der Schritt des Überwachens auf dem Niveau des Rechners (10) des Regelungssystems die folgenden Schritte aufweist:
- Auslösen (S₃) einer Verzögerung (T) ab dem Übertragen einer Warnungsabfrage (R₁, R₂),
- Erzeugen (S₇) einer Information in Zusammenhang mit dem Quittungsrückmeldungsmangel, wenn keine Quittungsrückmeldung (A₁, A₂) während einer vorbestimmten Dauer (T_{Seuil}) empfangen wird,
- Prüfen (S₈), dass eine Warnungsabfrage (R₂) im Anschluss an den Empfang einer Quittungsrückmeldung immer noch anliegt,
- Überwachen (S₁₀) des Empfangs der Quittungsrückmeldung (A₂), solange die Warnungsabfrage (R₂) läuft,
- Erzeugen (S₁₀) einer Information über den Quittungsrückmeldungsmangel, wenn der Empfang der Quittungsrückmeldung (A₂) endet, während die Warnungsabfrage (R₂) läuft.

2. Steuerverfahren nach Anspruch 1, **dadurch gekennzeichnet, dass** das Regelungssystem deaktiviert wird, wenn eine Information über den Quittungsrückmeldungsmangel erzeugt wurde.

3. Steuerverfahren nach Anspruch 1, **dadurch gekennzeichnet, dass** das Regelungssystem deaktiviert wird, wenn die Anzahl von Informationen über den Quittungsrückmeldungsmangel, die über eine vorbestimmte Zeitspanne erzeugt werden, größer ist als eine vorbestimmte Limitanzahl.

4. Geschwindigkeitsregelungssystem mit dezentraler Steuerung für Kraftfahrzeug, bei dem ein Rechner (10) des Regelungssystems dafür geeignet ist, an einen Rechner (20) des Armaturenbretts Warnungsabfragen (R₁, R₂) über einen CAN-Bus (50) zu senden, **dadurch gekennzeichnet, dass** der Rechner (10) des Regelungssystems dafür geeignet ist, den Empfang einer Quittungsrückmeldung (R₁, R₂) im Anschluss an das Senden einer Warnungsabfrage (A₁, A₂) gemäß den Schritten des Verfahrens nach Anspruch 1 zu überwachen und eine Information über den Quittungsrückmeldungsmangel bei Nichterhalten der Quittungsrückmeldung (R₁, R₂) zu erzeugen.

5. Regelungssystem nach Anspruch 4, **dadurch gekennzeichnet, dass** der Rechner (10) des Regelungssystems dafür geeignet ist, das Regelungssystem zu deaktivieren, wenn die Anzahl von Informationen über den Quittungsrückmeldungsmangel, die über eine vorbestimmte Zeitspanne erzeugt werden, größer ist als eine vorbestimmte Limitanzahl.

## Claims

1. Method for controlling a speed regulating system with distance control for motor vehicle, in which a computer (10) of said regulating system transmits alert requests (R1, R2) to a dashboard computer (20) by way of a CAN bus (50), **characterized in that** it comprises the following steps:
- On receipt of an alert request (R1, R2), generation by the dashboard computer (20) of an acknowledgment message (A1, A2) and transmission of said acknowledgment message (A1, A2) on said CAN bus (50) destined for the computer (10) of the regulating system;
- Monitoring by the computer (10) of the regulating system of the receipt of said acknowledgment message (A1, A2), the monitoring step comprising, at the level of the computer (10) of the regulating system, the steps of:
- Triggering (S3) of a timeout (T) as soon as an alert request (R1, R2) is transmitted;
- Generation (S7) of an information item relating to the defect of acknowledgment if no acknowledgment message (A1, A2) is received for a predetermined duration (T_{Thresh});
- Verification (S8) that an alert request (R2) is still in progress subsequent to the receipt of an acknowledgment message;
- Monitoring (S10) of the receipt of said acknowledgment message (A2) as long as the alert request (R2) is in progress;
- Generation (S10) of an information item relating to the defect of acknowledgment if the receipt of the acknowledgment message (A2) ends while the alert request (R2) is in progress.

2. Control method according to Claim 1, **characterized in that** the regulating system is deactivated if an information item relating to the defect of acknowledgment has been generated.

3. Control method according to Claim 1, **characterized in that** the regulating system is deactivated if the number of information items relating to the defect of acknowledgment that are generated over a predefined period is greater than a predetermined limit number.

4. Speed regulating system with distance control for motor vehicle, in which a computer (10) of said regulating system is able to transmit alert requests (R1, R2) to a dashboard computer (20) by way of a CAN bus (50), **characterized in that** said computer (10) of said regulating system is able to monitor the receipt of an acknowledgment message (R1, R2) subsequent to the emission of an alert request (A1, A2) in accordance with the steps of the method according to Claim 1, and to generate an information item relating to the defect of acknowledgment in the case of non-receipt of said acknowledgment message (R1, R2).

5. The regulating system according to Claim 4, **characterized in that** said computer (10) of said regulating system is able to deactivate the regulating system when the number of information items relating to the defect of acknowledgment that are generated over a predefined period is greater than a predetermined limit number.
